# EUROPÄISCHE PATENTSCHRIFT

(11) **EP 1 665 483 B1**
(45) Veröffentlichungstag und Bekanntmachung des Hinweises auf die Patenterteilung: **24.01.2007**
(21) Anmeldenummer: 04786839.3
(22) Anmeldetag: 16.09.2004
(51) Int. Cl.: H01T 15/00, H01C 7/12

(54) **EINRICHTUNG ZUR ÜBERWACHUNG DES LECKSTROMS EINES ÜBERSPANNUNGSABLEITERS**
DEVICE FOR SUPERVISING A LEAKAGE CURRENT OF A LIGHTING ARRESTER
DISPOSITIF POUR SURVEILLER LE COURANT DE FUITE D'UN PARAFOUDRE

(30) Priorität: 25.09.2003 DE 10345658
(43) Veröffentlichungstag der Anmeldung: 07.06.2006
(73) Patentinhaber: SIEMENS AKTIENGESELLSCHAFT, 80333 München (DE)
(72) Erfinder: SCHILLERT, Haiko, 15831 Mahlow (DE); SCHUBERT, Matthias, 13583 Berlin (DE); STEINFELD, Kai, 10553 Berlin (DE)
(86) Internationale Anmeldenummer: PCT/DE2004/002123
(87) Internationale Veröffentlichungsnummer: WO 2005/031931

(56) Entgegenhaltungen:
- DE-U- 29 615 186
- PATENT ABSTRACTS OF JAPAN Bd. 1996, Nr. 05, 31. Mai 1996 (1996-05-31) & JP 8 017552 A (MITSUBISHI ELECTRIC CORP), 19. Januar 1996 (1996-01-19) in der Anmeldung erwähnt
- PATENT ABSTRACTS OF JAPAN Bd. 2003, Nr. 06, 3. Juni 2003 (2003-06-03) & JP 2003 037932 A (M SYST GIKEN:KK), 7. Februar 2003 (2003-02-07) in der Anmeldung erwähnt
- PATENT ABSTRACTS OF JAPAN Bd. 0151, Nr. 08 (E-1045), 14. März 1991 (1991-03-14) & JP 3 001476 A (FUJI ELECTRIC CO LTD), 8. Januar 1991 (1991-01-08) in der Anmeldung erwähnt

## Beschreibung

Die Erfindung betrifft eine Einrichtung zur Überwachung des Leckstroms eines Überspannungsableiters nach dem Oberbegriff des Hauptanspruchs.

Überspannungsableiter für elektrische Energieübertragungssysteme sind außerordentlich zuverlässige Geräte, es besteht aber trotzdem häufig der Wunsch nach einer Überwachung des Betriebszustandes des Ableiters. Dies ist insbesondere dann der Fall, wenn die Geräte, z.B. durch Auslegung oder Umweltbedingungen ungewöhnlich scharf beansprucht werden oder an besonders bedeutsamen Netzpunkten, wie an Maschinentransformatoren oder strategisch wichtigen Umspannanlagen installiert sind. Hier möchte der Anwender durch Überwachungseinrichtungen frühzeitig erkennen können, ob der Ableiter in der Lage ist, Überspannungen mit dem spezifizierten Energieinhalt jederzeit zuverlässig abzuleiten oder ob der Ableiter geschädigt ist und Ausfall droht. Neben dem etablierten Verfahren des Einbaus einer Kontrollfunkenstrecke in Reihe zum Ableiter, bei dem Ansprechmarken auf den polierten Elektroden der Funkenstrecke ausgewertet werden, und dem Verfahren der Verwendung von Ansprechzählern, die das Auftreten eines Ableitvorganges oberhalb einer bestimmten Amplitude registrieren, sind insbesondere bei modernen Metalloxid-Ableitern Verfahren der Messung von Leckströmen bekannt. Bei Metalloxid-Ableitern ist der Aktivteil nicht galvanisch vom Netz getrennt, sondern liegt permanent an Spannung. Damit spiegeln sich die elektrischen Eigenschaften des Aktivteils zu jedem Zeitpunkt im Leckstrom durch den Ableiter wider. Es ist die so genannte Gesamt-Leckstrommessung bekannt, bei der üblicherweise der Scheitelwert des Gesamt-Leckstroms ausgewertet wird, wobei ausgenutzt wird, dass sich dem normalerweise überwiegende kapazitiven Leckstrom mit steigender Temperatur des Aktivteils bzw. steigender daran anliegender Spannung ein zunehmender resistiver Anteil überlagert, der den Gesamtleckstrom erhöht. Aufgrund von verschiedenen Einflussgrößen, die in den GesamtLeckstrom eingehen, kann es jedoch zu Fehlinterpretationen kommen und es wird diesem Verfahren eine nur niedrige Informationsqualität zugebilligt.

Aus dem Patent Abstract of Japan JP 11307226 A ist eine Überwachungseinrichtung für einen Überspannungsableiter bekannt. Die Überwachungseinrichtung wird aus einer externen Energieversorgungseinrichtung versorgt. Die von dieser externen E-nergieversorgungseinrichtung gelieferte Spannung wird mit der Netzspannung des Überspannungsableiters synchronisiert, um eine Überwachung des Überspannungsableiters zu gewährleisten.

Weiterhin ist aus dem Patent Abstract of Japan JP 2003037932 A ein Überspannungsableiter bekannt, der eine Einrichtung aufweist, die die Ableiteralterung überwacht. Eine Leckstromüberwachung detektiert den Leckstrom des Überspannungsableiters. Zusätzlich wird die Anzahl der Ableitvorgänge des Überspannungsableiters überwacht. Mit dem Erreichen einer vorgegebenen Anzahl von Ableitvorgängen werden entsprechend farblich unterschiedliche Leuchtsignale abgegeben.

Aus den Patents Abstracts of Japan JP 09145759 A und JP 2000321318 A sind jeweils Vorrichtungen zur Überwachung eines Überspannungsableiters bekannt. Zur Überwachung wird der Leckstrom eines Ableiters überwacht und in einer Rechnereinheit ausgewertet. Dazu wird beispielsweise eine Fouriertransformation durchgeführt. Das Ergebnis der Analyse wird jeweils in einer Anzeigeeinrichtung dargestellt.

Aus dem Patent Abstract of Japan JP 03001476 A ist eine Überwachungseinrichtung zur Inspektion eines Überspannungsableiters bekannt. In den Erdungsstrompfad eines Überspannungsableiters wird ein Messwandler eingefügt. Dabei bildet der Erdanschluss die Primärwicklung aus. Der Messwandler wird mit einem Inspektionsstrom aus einer externen Wechselspannungsquelle gespeist.

Aus dem Patent Abstract of Japan JP 08017552 A ist eine Einrichtung zur Überwachung eines Leckstromes eines Überspannungsableiters bekannt. Der Leckstrom des Überspannungsableiters wird mittels einer Detektionseinrichtung überwacht. Aus dem gemessenen Leckstrom wird mittels einer Recheneinheit eine resistive Komponente herausgerechnet. Dieser resistive Anteil des Leckstromes wird genutzt, um den Zustand des Überspannungsableiters zu diagnostizieren.

Das für Metalloxid-Ableiter beispielsweise verwendete Zinkoxidmaterial weist eine spannungsabhängig nicht lineare Leitfähigkeit auf, die bei Anlegen einer sinusförmigen Spannung zur Ausbildung einer dritten harmonischen Komponenten im resistiven Leckstrom des Ableiters führt. Vergrößert sich der resistive Anteil des Leckstroms beispielsweise durch Degradation, bedeutet dies eine Verlagerung in den Bereich veränderter Nichtlinearität der Kennlinie und damit ein weiteres Ansteigen des Anteils der dritten harmonischen Komponente. Es sind daher Verfahren bekannt, bei denen eine Analyse der dritten Harmonischen des Leckstroms durchgeführt wird. Dazu wird üblicherweise über ein Messelement der Leckstrom ausgekoppelt und über eine Filteranordnung geleitet, über die die dritte harmonische Komponente ausgefiltert wird und hinsichtlich ihrer Amplitude ausgewertet wird. Diesem Verfahren liegt zur Zeit jedoch der Nachteil zugrunde, dass die zur Verfügung stehenden Geräte kostenintensiv sind und ein großes Maß an Erfahrung für die richtige Messung und Interpretation der Messwerte erfordern. Außerdem benötigen diese Geräte eine Hilfsenergie für ihre Spannungsversorgung und werden daher üblicherweise nicht für die kontinuierliche Dauerüberwachung fest an Ableitern verwendet.

Der Erfindung liegt daher die Aufgabe zugrunde, eine Einrichtung zur Überwachung des Leckstroms eines Überspannungsableiters unter Verwendung der dritten harmonischen Oberschwingung des Leckstroms zu fassen, bei der keine Hilfsenergie für die Versorgung der Bauteile erforderlich ist, die Messergebnisse einfach auszuwerten sind und die kostengünstig herzustellen ist, so dass eine Dauerüberwachung fest am Ableiter möglich ist.

Diese Aufgabe wird erfindungsgemäß durch die kennzeichnenden Merkmale des Hauptanspruchs in Verbindung mit den Merkmalen des Oberbegriffs gelöst.

Dadurch, dass die Filteranordnung mit einer Auswerteschaltung der dritten harmonischen Oberschwingung verbunden ist, die gegebenenfalls mindestens ein Warnsignal an eine an die Auswerteschaltung angeschlossene Anzeigevorrichtung abgibt und dass in den Ableitstromkreis ein Übertrager geschaltet ist, über den die Energie für eine Spannungsversorgung der Filteranordnung und der Auswerteschaltung auskoppelbar ist, ist keine Hilfsenergie für die Elektronikbauteile erforderlich, d.h. letztere sind leckstromgespeist und es ist keine benutzerabhängige Fehlinterpretation möglich und es sind nur geringere Anforderungen an die Qualifikation des Benutzers gegeben, da das Ergebnis der Überwachung angezeigt wird. Weiterhin kann die Einrichtung aus Elektronik-Standardkomponenten hergestellt werden, wodurch es kostengünstig ist. Die Einrichtung kann daher für eine kontinuierliche Überwachung fest am Ableiter installiert werden.

Durch die in den Unteransprüchen angegebenen Maßnahmen sind vorteilhafte Weiterbildungen und Verbesserungen möglich. Als Messelement kann in vorteilhafter Weise ein Messwiderstand verwendet werden, es ist jedoch auch der Einsatz einer einen Stromkompensator umfassenden stromkompensierten Spulenanordnung möglich.

Als Filteranordnung ist ein aktiver Bandpass mit einer Frequenz von 150 Hz und als Auswerteschaltung ein Mikroprozessor verwendbar. In einer vereinfachten Ausführung kann der Mikroprozessor durch einen einfachen diskreten oder integrierten Schwellenwertschalter ersetzt werden.

In einer vorteilhaften Ausführungsform weist die Anzeigevorrichtung eine oder mehrere Leuchtdioden auf, wobei für die vereinfachte Version mit dem Schwellenwertschalter nur eine Leuchtdiode vorsehbar ist, die das Überschreiten einer vorgegebenen Schwelle anzeigt, in besonders vorteilhafter Weise sind jedoch drei Leuchtdioden in den Farben einer Ampel mit dem Mikroprozessor verbunden, die den fehlerlosen, den kritischen und den fehlerhaften Betrieb anzeigen. Besonders vorteilhaft ist, in den Ableitstromkreis eine Spulenanordnung mit Ringkern und zwei um den Ringkern gewickelte Wicklungen zu schalten, deren Anschlüsse nach außen geführt sind, da im kritischen Fall, d.h. wenn die Auswerteschaltung ein Warnsignal abgibt, ein externes Messgerät angeschlossen werden kann, das eine genauere Messung und Bewertung des Betriebszustandes vornehmen kann.

Ausführungsbeispiele der Erfindung sind in der Zeichnung dargestellt und werden in der nachfolgenden Beschreibung näher erläutert. Es zeigen:
- Fig. 1: eine schaltungsgemäße Ausgestaltung der Überwachungseinrichtung nach der Erfindung,
- Fig. 2: eine weitere Ausführungsform der in Fig. 1 verwendeten Abtastschaltung der dritten harmonischen Oberschwindung, und
- Fig. 3: eine weitere Ausführungsform der in Fig. 1 verwendeten Auswerteschaltung mit Anzeige.

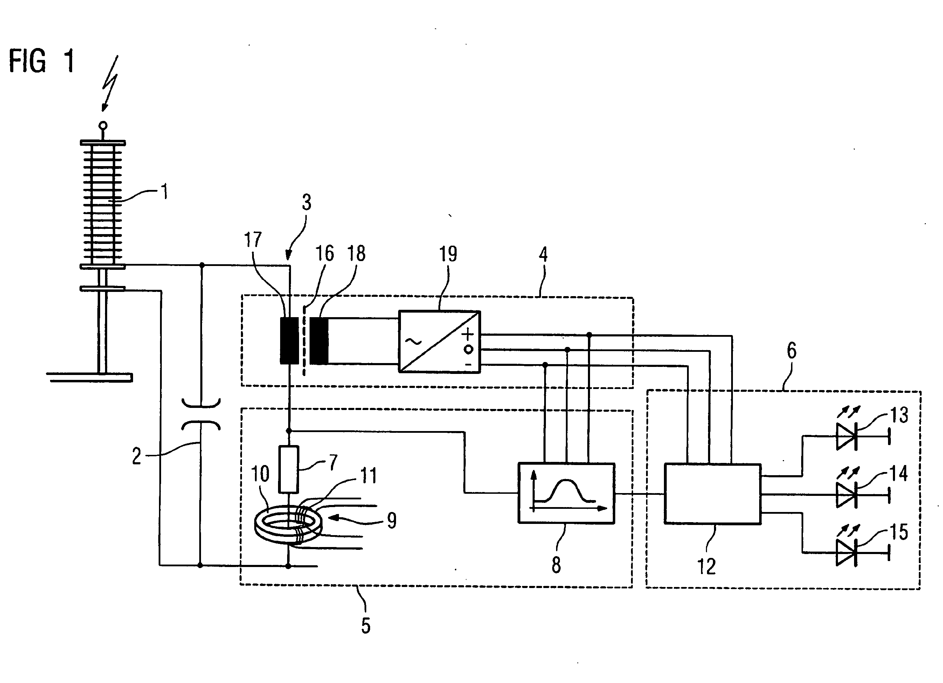

Die in Fig. 1 dargestellte Einrichtung zur Überwachung des Leckstroms weist einen Metalloxid-Ableiter 1 mit einer Schutzfunkenstrecke 2 für Ableitströme sowie den eigentlichen Leckstromzweig 3 auf. Die Einrichtung umfasst neben dem Ableiter 1 drei Schaltungseinheiten, eine Spannungsversorgungseinheit 4, eine Abtastschaltung 5 für die dritte harmonische Oberwelle und eine Auswerteeinheit 6. Die Abtastschaltung 5 weist einen in den Leckstromzweig 3 geschalteten Messwiderstand 7 und einen aktiven Bandpass 8 mit einer Mittenfrequenz von 150 Hz auf. Zusätzlich ist in dem Leckstromkreis 3 eine Spulenanordnung 9 angeordnet, die einen Ringkern 10 und zwei um den Ringkern gewickelte Spulen 11 aufweist, wobei die Anschlüsse der Spulen für den Anschluss an ein externes Messgeräte nach außen geführt sind.

Die Auswerteeinheit 6 besteht im Wesentlichen aus einer Mikroprozessorschaltung 12 und drei Leuchtdioden 13, 14, 15, die im Ausführungsbeispiel in den Farben einer Ampel, nämlich grün, gelb und rot ausgewählt sind. Selbstverständlich können auch andere Lichtquellen grundsätzlich verwendbar sein, wobei auch anstelle der optischen Anzeigeelemente gegebenenfalls auch ein oder mehrere akustische Anzeigeelemente denkbar sind.

Die Spannungsversorgungseinheit 4 umfasst einen Übertrager 16, dessen Primärwicklung 17 in den Leckstromzweig 3 geschaltet ist und dessen Sekundärwicklung 18 mit einem Netzteil 19 mit Gleichrichtschaltung und Siebschaltung verbunden ist. Der Bandpass 8 und die Mikroprozessorschaltung 12 sind für ihre Spannungsversorgung mit den Ausgängen des Netzteils 19 verbunden. Über den Übertrager 16 wird aus dem im Leckstromzweig 3 fließenden Leckstrom die Hilfsenergie potentialfrei ausgekoppelt, wobei die Sekundärspule 18 einen Wechselstrom an das Netzteil 19 liefert. Das Netzteil führt eine Gleichrichtung und eine Siebung durch und stellt an seinem Ausgang eine positive und eine negative Gleichspannung mit entsprechendem Nullpotential zur Verfügung.

Während des Betriebes des Ableiters 1 wird der Leckstrom von dem Messwiderstand 7 abgetastet und an den aktiven Bandpass 8 geliefert, der die dritte harmonische Oberschwingungen aus dem abgetasteten Leckstrom herausfiltert. Die Mikroprozessorschaltung 12 bewertet die dritte harmonische Oberschwingung nach der Größe ihres Scheitelwertes und steuert die LEDs 13 bis 15 an. Dazu beinhaltet die Mikroprozessorschaltung 12 drei Schwellenwerte, wobei bei einem Scheitelwert unterhalb einer ersten Schwelle der normale Betrieb mit einer grünen LED 13, einem Scheitelwert über der ersten Schwelle, aber unter der zweiten Schwelle als kritischer Bereich, mit einer gelben LED 14, und einem Scheitelwert über der zweiten Schwelle mit einer rote LED den fehlerhaften Betrieb anzeigen.

Wie schon oben ausgeführt wurde, dient die Spulenanordnung 9, die als stromkompensierte Spule schaltbar ist lediglich als zusätzlicher Sensor für ein externes Messgerät zur genauen kompensierten Messung der dritten Harmonischen, falls beispielsweise die gelbe LED 14 blinkt.

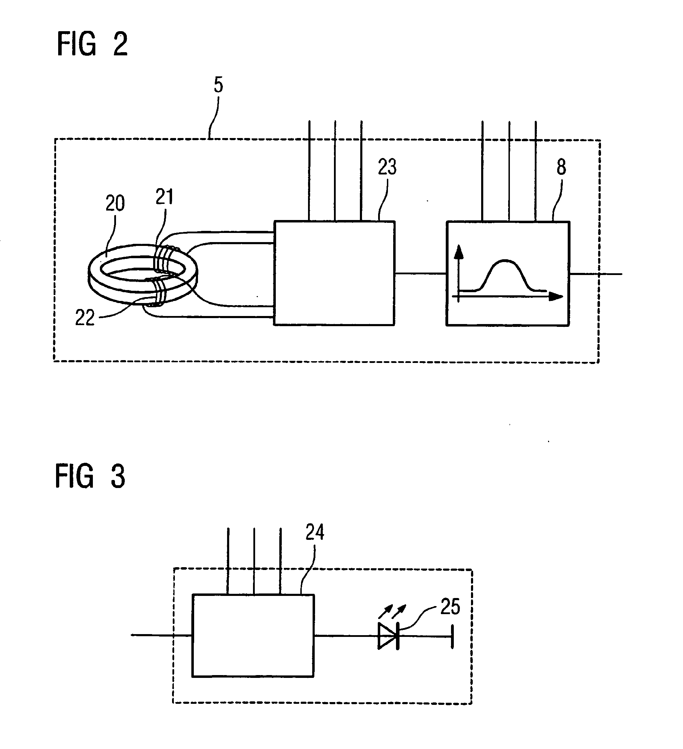

In Fig. 2 ist eine weitere Ausführungsform einer Abtastschaltung 5 dargestellt, die anstelle der Abtastschaltung nach Fig. 1 eingesetzt werden kann, d.h., der Messwiderstand 7 nach Fig. 1 wird durch eine stromkompensierte Spulenanordnung ersetzt, die einen Ringkern 20 mit zwei Spulen 21, 22 und einen an die Anschlüsse der Spulen 21, 22 angeschlossenen Stromkompensator 23 aufweist. Dabei wird das Gesamtmagnetfeld der Spulenanordnung durch einen Gegenstrom zur Null gemacht, so dass am Ausgang des Stromkompensators 23 die Messspannung zur Verfügung steht. Der aktive Bandpass 8 filtert wiederum die dritte harmonische Oberschwingung aus.

In Fig. 3 ist eine Variante der Auswerteeinheit 6 dargestellt, bei der die Mikroprozessorschaltung 12 durch einen einfachen Schwellenwertschalter 24 ersetzt ist, der nur einen Schwellenwert für die Anzeige des kritischen Betriebsbereiches aufweist. In diesem Ausführungsbeispiel gibt es dann nur eine LED 25, die beispielsweise gelb leuchten oder blinken kann.

Die Spulenanordnung 9 kann zusätzlich in allen Ausführungsbeispielen vorhanden sein.

## Patentansprüche

1. Einrichtung zur Überwachung des Leckstroms eines Überspannungsableiters (1) mit einem Messelement (7) zum Abtasten des im Ableitstromkreis (3) fließenden Leckstroms und einer Filteranordnung (8) zum Ausfiltern der dritten harmonischen Oberschwingung aus dem Leckstrom, die ein Maß für den Betriebszustand des Ableiters (1) ist, wobei die Filteranordnung (8) mit einer Auswerteschaltung (12, 24) für die dritte harmonische Oberschwingung verbunden ist,
**dadurch gekennzeichnet,**
**dass** gegebenenfalls mindestens ein Warnsignal an eine an die Auswerteschaltung (12, 24) angeschlossene Anzeigevorrichtung (13, 14, 15, 25) abgegeben wird, und dass in den Ableitstromkreis (3) ein Übertrager (16) geschaltet ist, über den die Energie für eine Spannungsversorgung der Filteranordnung (8) und der Auswerteschaltung (12, 24) auskoppelbar ist.

2. Einrichtung nach Anspruch 1, **dadurch gekennzeichnet, dass** die Primärwicklung (17) des Übertragers (16) im Ableitstromkreis (3) liegt und die Sekundärwicklung (18) mit einer Gleichrichterschaltung (19) verbunden ist, die mit der Filteranordnung (8) und der Auswerteschaltung (12, 24) verbunden ist.

3. Einrichtung nach Anspruch 1 oder Anspruch 2, **dadurch gekennzeichnet, dass** das Messelement ein Messwiderstand (7) ist.

4. Einrichtung nach Anspruch 1 oder Anspruch 2, **dadurch gekennzeichnet, dass** das Messelement eine einen Stromkompensator (23) umfassende stromkompensierte Spulenanordnung ist, wobei der Stromkompensator (23) mit der Filteranordnung (8) und der Gleichrichterschaltung verbunden ist.

5. Einrichtung nach einem der Ansprüche 1 bis 4, **dadurch gekennzeichnet, dass** die Filteranordnung einen aktiven Bandpass (8) umfasst.

6. Einrichtung nach einem der Ansprüche 1 bis 5, **dadurch gekennzeichnet, dass** die Auswerteschaltung eine Mikroprozessorschaltung (12) umfasst, die die Scheitelwerte der dritten harmonischen Oberschwingung auswertet und mindestens ein Warnsignal abgibt.

7. Einrichtung nach einem der Ansprüche 1 bis 5, **dadurch gekennzeichnet, dass** die Auswerteschaltung eine Schwellenwertschaltung (24) ist, die bei Überschreiten einer Schwelle ein Warnsignal abgibt.

8. Einrichtung nach einem der Ansprüche 1 bis 7, **dadurch gekennzeichnet, dass** die Anzeigevorrichtung optischer oder akustischer Art ist.

9. Einrichtung nach einem der Ansprüche 1 bis 8, **dadurch gekennzeichnet, dass** die Anzeigevorrichtung mindestens eine LED (13, 14, 15, 25) aufweist.

10. Einrichtung nach einem der Ansprüche 1 bis 9, **dadurch gekennzeichnet, dass** die Anzeigevorrichtung mehrere LEDs (13, 14, 15) umfasst und dass die Auswerteschaltung (12) abhängig von der Größe der Scheitelwerte unterschiedliche Leuchtdioden ansteuert.

11. Einrichtung nach einem der Ansprüche 1 bis 10, **dadurch gekennzeichnet, dass** in dem Ableitstromkreis (3) eine mit einem Ringkern (10) und zwei um den Ringkern gewickelte Spulen (11) versehene Spulenanordnung (9) geschaltet ist, wobei die Anschlüsse der Spulen für die Verbindung mit einem externen Messgerät im Falle des Vorhandenseins eines Warnsignals nach außen geführt sind.

## Claims

1. Device for monitoring the leakage current of a surge arrester (1) having a measuring element (7) for the purpose of checking the leakage current flowing in the arrester circuit (3) and a filter arrangement (8) for the purpose of filtering out the third harmonic from the leakage current, which is a measure of the operating state of the arrester (1), the filter arrangement (8) being connected to an evaluation circuit (12, 24) for the third harmonic, **characterized in that**, if appropriate, at least one warning signal is output to a display apparatus (13, 14, 15, 25) which is connected to the evaluation circuit (12, 24), and **in that** a transformer (16) is connected into the arrester circuit (3), via which transformer (16) the power for a voltage supply to the filter arrangement (8) and the evaluation circuit (12, 24) can be output.

2. Device according to Claim 1, **characterized in that** the primary winding (17) of the transformer (16) is in the arrester circuit (3), and the secondary winding (18) is connected to a rectifier circuit (19), which is connected to the filter arrangement (8) and the evaluation circuit (12, 24).

3. Device according to Claim 1 or Claim 2, **characterized in that** the measuring element is a measuring resistor (7).

4. Device according to Claim 1 or Claim 2, **characterized in that** the measuring element is a current-compensated coil arrangement comprising a current compensator (23), the current compensator (23) being connected to the filter arrangement (8) and the rectifier circuit.

5. Device according to one of Claims 1 to 4, **characterized in that** the filter arrangement comprises an active bandpass filter (8).

6. Device according to one of Claims 1 to 5, **characterized in that** the evaluation circuit comprises a microprocessor circuit (12), which evaluates the peak values of the third harmonic and outputs at least one warning signal.

7. Device according to one of Claims 1 to 5, **characterized in that** the evaluation circuit is a threshold value circuit (24), which outputs a warning signal when a threshold value is exceeded.

8. Device according to one of Claims 1 to 7, **characterized in that** the display apparatus is of the visual or audible type.

9. Device according to one of Claims 1 to 8, **characterized in that** the display apparatus has at least one LED (13, 14, 15, 25).

10. Device according to one of Claims 1 to 9, **characterized in that** the display apparatus comprises a plurality of LEDs (13, 14, 15), and **in that** the evaluation circuit (12) drives different light-emitting diodes on the basis of the magnitude of the peak values.

11. Device according to one of Claims 1 to 10, **characterized in that** a coil arrangement (9), which is provided with a toroidal core (10) and two coils (11) wound around the toroidal core, is connected in the arrester circuit (3), the connections of the coils being passed to the outside for connection to an external measuring device in the event of the presence of a warning signal.

## Revendications

1. Dispositif de surveillance du courant de fuite d'un parafoudre (1), comprenant un élément (7) de mesure pour détecter le courant de fuite passant dans le circuit (3) du courant de décharge et un dispositif fuite de filtre pour filtrer le troisième harmonique du courant de fuite qui est une mesure de l'état de fonctionnement du parafoudre (1), le dispositif fuite de filtre étant relié à un circuit (12-14) d'évaluation du troisième harmonique
**caractérisé**
**en ce que**, le cas échéant, au moins un signal d'avertissement est émis sur un dispositif (13-14-15-25) d'indication raccordé au circuit (12-24) d'évaluation et
**en ce que**, dans le circuit (3) de courant de décharge, est monté un transformateur par lequel l'énergie pour une alimentation à tension du dispositif (8) de filtre et du circuit (12-14) d'évaluation peut être découplé.

2. Dispositif suivant la revendication 1, **caractérisé en ce qu'**un roulement (17) primaire du transformateur (16) se trouve dans le circuit (3) du courant de décharge et un roulement (18) secondaire est relié à un circuit (19) redresseur qui est relié au dispositif (8) de filtre et au circuit (12-14) d'évaluation.

3. Dispositif suivant la revendication 1 ou 2, **caractérisé en ce que** l'élément de mesure est une résistance (7) de mesure.

4. Dispositif suivant la revendication 1 ou 2, **caractérisé en ce que** l'élément.de mesure est un dispositif à bobine compensé en courant et comprenant un compensateur (23) de courant, ce compensateur (23) de courant étant relié au dispositif (8) de filtre et au circuit redresseur.

5. Dispositif suivant la revendication 1 à 4, **caractérisé en ce que** le dispositif de filtre comprend un passe-bande (8) actif.

6. Dispositif suivant l'une des revendications 1 à 5,**caractérisé en ce que** le circuit d'évaluation comprend un circuit (12) à micro-processeur qui évalue les valeurs de crête du troisième harmonique et émet au moins un signal d'avertissement.

7. Dispositif suivant l'une des revendications 1 à 5, **caractérisé en ce que** le circuit d'évaluation est un circuit (24) à valeur de seuil, qui émet un signal d'avertissement lorsqu'un seuil est dépassé.

8. Dispositif suivant l'une des revendications 1 à 7,
**caractérisé en ce que** le dispositif d'indication est du type optique ou acoustique.

9. Dispositif suivant l'une des revendications 1 à 8, **caractérisé** le dispositif d'indication comprend au moins une LED (13,14,15,25).

10. Dispositif suivant l'une des revendications 1 à 9, **caractérisé en ce que** le dispositif d'indication comprend plusieurs LED (13,14,15) et **en ce que** le circuit (12) d'évaluation commande des diodes électro-luminescentes différentes,en fonction de l'amplitude des valeurs de crête

11. Dispositif suivant l'une des revendications 1 à 10, **caractérisé en ce que** dans le circuit (3) de courant de décharge est monté un dispositif (9) à bobine munie d'un noyau (10) annulaire et de deux bobines (11) enroulées sur le noyau (10) annulaire, les bornes des bobines étant guidées vers l'extérieur, pour la liaison avec un appareil extérieur de mesure dans le cas de la présence d'un signal d'avertissement.
